# EUROPEAN PATENT SPECIFICATION

(11) **EP 1 697 662 B1**
(45) Date of publication and mention of the grant of the patent: **08.04.2009**
(21) Application number: 04818847.8
(22) Date of filing: 19.11.2004
(51) Int. Cl.: F16J 1/16

(54) **PHOSPHATIZED AND BUSHINGLESS PISTON AND CONNECTING ROD ASSEMBLY HAVING AN INTERNAL GALLERY AND PROFILED PISTON PIN**
PHOSPHATIERTE UND BUCHSENLOSE KOLBEN- UND VERBINDUNGSSTANGENANORDNUNG MIT EINEM INNEREN KÜHLMITTELKANAL UND EINEM PROFILIERTEN KOLBENBOLZEN
ENSEMBLE PISTON/BIELLE SANS BAGUE PHOSPHATE COMPORTANT UNE GALERIE INTERNE ET UN TOURILLON DE PISTON PROFILE

(30) Priority: 20.11.2003 US 718438
(43) Date of publication of application: 06.09.2006
(73) Proprietor: Mahle Technology, Inc., Farmington, MI 48335 (US); MAHLE GMBH, 70376 Stuttgart (DE)
(72) Inventor: REIN, Wolfgang, Milford, MI 48380 (US); DOUGLAS, Jonathan, Russelville, TN 37860 (US)
(74) Representative: Pohle, Reinhard
(86) International application number: PCT/IB2004/004244
(87) International publication number: WO 2005/050067

(56) References cited:
- US-A- 5 352 541
- US-A- 5 542 341
- PATENT ABSTRACTS OF JAPAN vol. 1995, no. 05, 30 June 1995 (1995-06-30) & JP 07 054997 A (TOYOTA MOTOR CORP), 28 February 1995 (1995-02-28)

## Description

### BACKGROUND OF THE INVENTION

### 1. Field of the Invention

The present invention relates, generally, to a piston and connecting rod assembly for an internal combustion engine, and, more specifically, to such an assembly including a bushingless small-end connecting rod having an internal gallery and a phosphatized coating for use with a profiled piston pin to improve wear of the piston/connecting rod pivot point and reduce deformation of the pin bore.

### 2. Description of the Related Art

Internal combustion engines known in the related art may generally include, among other basic components, an engine block having one or more cylinders, cylinder heads associated with the engine block and pistons supported for reciprocal movement in each cylinder. The piston generally includes a body having a crown and a skirt that depends from the crown to define the bottom half of the body of the piston. A pin bore is formed in the skirt. The pin bore corresponds to a similar bore at one end of the connecting rod. A pin is placed through the corresponding bores to attach the piston to the connecting rod. The end of a connecting rod having the piston pin bore is commonly referred to as the "pin end" or "small end." The other end of a connecting rod is fastened to the crankshaft at a particular location. This end of the connecting rod is commonly referred to as the "crank end" or "large end."

Generally, fuel is combusted within the cylinders to reciprocate the pistons. The piston drives the connecting rod, which drives the crankshaft, causing it to rotate within the engine block. Specifically, the combustion pressure within the cylinder drives the piston downward in a substantially linear motion. Focusing on the movement between the piston and the connecting rod, the term "top dead center" refers to the location of the piston at its uppermost point of reciprocal travel relative to the cylinder and is a point at which the piston is at a dead stop or zero velocity. Correspondingly, the term "bottom dead center" refers to the location of the piston at its lowermost point of reciprocal travel relative to the cylinder and is also a point at which the piston is at a dead stop or zero velocity. During movement of a piston from top dead center to bottom dead center on the powerstroke, the angle of the connecting rod produces a force component on the side of the piston commonly referred to as, "major thrust side." On the other hand, during return movement of a piston from bottom dead center to top dead center produces a force component on the side of the piston commonly referred to as, "minor thrust side." As fuel is combusted within a cylinder, the piston's reciprocal powerstroke and return movements drive the small end of the connecting rods in a substantially linear but slightly rotational motion. On the other hand, the large end of the connecting rod is attached to the crankshaft, which drives the large end of the connecting rod in a substantially rotational motion.

The combined linear and rotational movement of the connecting rod imposes a high level of stress on both the large end and small end pivot points. As between the two pivot points, the small end pivot point receives the greatest amount of stress, since it is adapted to facilitate angular movement of the connecting rod relative to the piston pin and piston skirt during the cycle from top dead center to bottom dead center and back. The combination of high loads, temperature, gas pressure and inertial forces localized at this pivot point requires that the small end of the connecting rod retain heightened properties relating to strength, wear, thermal stress and lubrication.

Stress imposed upon this pivot point may deform the piston pin, piston pin bore, and small end of the connecting rod. As a result of this deformation, the pivot point between the pin bore and connecting rod small end begins to scuff and wear. Scuffing in this area may lead to destruction of the pivot point and engine failure.

To counter the high loads imposed upon this pivot point, and to reduce friction and facilitate smooth angular movement, bronze bushings are typically employed between the bore of the small end of the connecting rod and the piston pin. The bushings reduce friction and facilitate smooth angular movement at this pivot point, thereby reducing deformation. However, bushings add weight to this pivot point and also require additional steps in manufacturing and assembly, both of which are generally undesirable.

Patent JP 07 054 997 A discloses a piston pin lubricating device that is designed to prevent a bushing from being damaged.

Attempts have been made in the art to eliminate the bronze bushing from the assembly through the application of a protective and/or friction dampening coating. For example, USPN 5,158,695 issued to Yashchenko et al. on 27 October 1992, discloses a material composed of copper, zinc, tin and diamond powder that is used in place of the conventional bronze bushings. However, the material disclosed in the '695 patent is applied to the piston pin and piston skirt but not to the connecting rod. Furthermore, in cases where bushings are not used, they are generally limited to either a diesel engine or for use with a non-profiled piston pin.

Additionally, USPN 6,557,457 issued to Heart et al. on May 6, 2003, discloses a bushingless piston and connecting rod assembly and method of manufacture where at least one of the running surfaces between the piston pin, piston pin bore, and connecting rod pin bore receives a phosphatized coating. However, the Heart '457 patent teaches a phosphatized coating having a thickness of about eight to fifteen microns for use with a non-profiled piston pin. During initial operation of the engine (the breaking-in period) a portion of the phosphatized coating of eight to fifteen microns in thickness may be worn away. This wear increases the tolerances at this contact point during operation of the internal combustion engine. In addition, the coating that is worn away may circulate through the combustion chamber of the engine causing damage.

Further, a worn coating may create an irregular contact surface area that exceeds the permitted tolerance, which also causes engine damage. To avoid increasing the permitted tolerances within this contact area, a phosphatized coated component surface may be honed so that it better accommodates the eight to fifteen micron coating thickness. However, in addition to including another step in the manufacturing process, honing the component may reduce the components structural integrity that can ultimately lead to premature failure.

Accordingly, while the piston and connecting rod assemblies of the type known in the related art have generally worked for their intended purposes, they suffer from disadvantages relating to facilitating smooth angular movement at the pivot point while reducing weight in an internal combustion engine. As a result, there is an ongoing need in the art to improve the interface between the piston pin and the small end of the connecting rod, in general. Specifically, there is an ongoing need to reduce weight and streamline manufacturing process steps while retaining strength and acceptable product life of piston/connecting rod assemblies. Thus, there continues to be a need in the art for an improved piston pin and connecting rod assembly that is both lighter and stronger than previous generations of this assembly that still maintains good friction and wear properties. USPN 5,352,541 discloses a sliding member made of aluminium bearing alloy. This patent teaches coating the sliding surface with a film of Aluminium fluoride or manganese phosphate formed by a chemical conversion process and having a thickness ranging from 0,1 µm to 10 µm.

### SUMMARY OF THE INVENTION

The present invention overcomes the disadvantages in the related art in a piston pin and connecting rod assembly that generally fulfills a need in the art for bushingless small end connecting rod for use in internal combustion engines. To this end, the piston pin and connecting rod assembly of the present invention includes a piston adapted for reciprocal movement within a cylinder of the internal combustion engine. The piston has a body including a pin bore. The assembly further includes a connecting rod adapted to interconnect the piston and a crankshaft so as to translate the reciprocal movement of the piston into rotational movement of the crankshaft. The connecting rod has first and second ends with at least one of the ends including a bore extending therethrough and adapted to be aligned with the pin bore of the piston. The assembly also includes a pin adapted to be operatively received through the aligned pin bore of the piston and the bore extending through the end of the connecting rod. The pin includes a pair of distal end faces, a center portion formed therebetween and a profiled outer circumference that is substantially circular in cross-section with a larger diameter at the distal end faces than at the center portion said pin tapers continuously from said distal end faces to said center portion. The end of the connecting rod aligned with the piston pin bore and/or the profiled outer circumference of the pin includes a phosphatized coating, having a thickness between two and eight microns, adapted to facilitate relative angular movement between the bore extending through the connecting rod and the outer circumference of the profiled piston pin. The alignment thereby facilitates reciprocal motion of the piston relative to the cylinder of an internal combustion engine.

In another preferred embodiment, the connecting rod has an internal gallery extending between the first and second ends to direct lubricant between the first and second ends of the connecting rod.

Accordingly, one advantage of the present invention is that it improves scuff resistance of a piston pin and small end connecting rod pivot point for preventing seizures at the pivot point and prolonging the life of the relative components of an internal combustion engine.

Another advantage of the present invention is that it reduces the weight of an internal combustion engine by eliminating the need for a bushing at the pivot point between the small end connecting rod small end and the piston pin.

Still another advantage of the present invention is that is improves lubrication at both the large and small ends of the connecting rod for reducing thermal stress at the connecting rod pivot points.

Still another advantage of the present invention is that it reduces the cost of manufacturing a piston and connecting rod assembly by eliminating the need for a bushing at the interface between the bore of the small end of the connecting rod and the piston pin.

Still another advantage of the present invention is that it reduces the cost of assembling a piston and connecting rod assembly by eliminating the need to install a bushing within the pivot point.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a cross-sectional environmental view of the piston and connecting rod assembly for use in an internal combustion assembly in accordance with the present invention.

Figure 2 is an exploded view of one embodiment of the piston and connecting rod assembly in accordance with the present invention.

Figure 3 is an enlarged cross-sectional view of the profiled piston pin employed in the piston and connecting rod assembly of the present invention.

Figure 4 is a cross-sectional view of one embodiment of the piston and connecting rod assembly of the present invention where the connecting rod is shown having a stepped configuration.

Figure 5 is a cross-sectional view of another embodiment of the piston and connecting rod assembly of the present invention where the connecting rod is shown having a trapezoidal configuration.

Figure 6 is an exploded view of another embodiment of the piston and connecting rod assembly in accordance with the present invention where the profiled piston pin includes a phosphatized coating.

Figure 7 is a cross-sectional view of the piston and connecting rod assembly of the present invention where the phosphatized connecting rod is shown having a stepped configuration and the piston pin bore includes a phosphatized coating.

Figure 8 is a cross-sectional view of the piston and connecting rod assembly of the present invention where the phosphatized connecting rod is shown having a trapezoidal configuration and the piston pin bore includes a phosphatized coating.

### DETAILED DESCRIPTION OF THE INVENTION

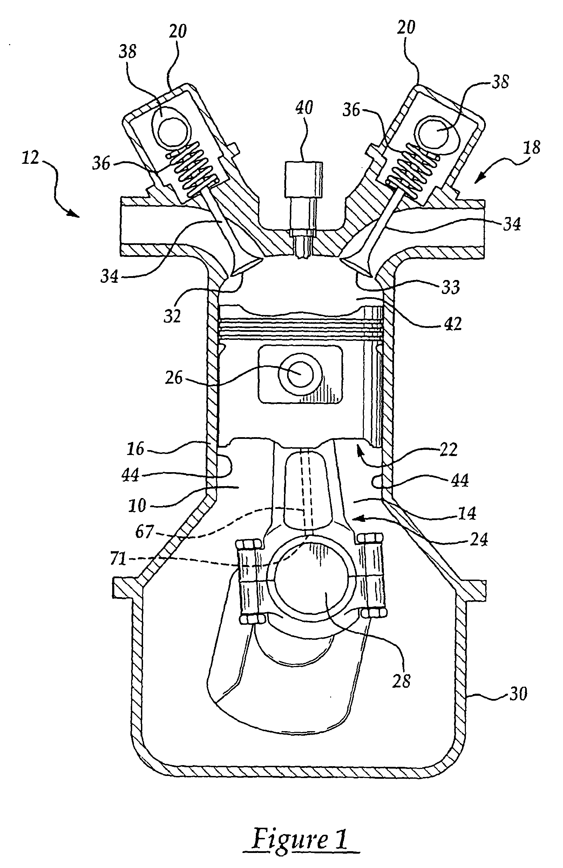

The present invention overcomes the disadvantages in the related art in a piston and connecting rod assembly, generally indicated at 10 and 110, in Figures 1-8, where like numbers are used to designate like structures throughout the drawings. As shown in Figure 1, the present invention is particularly adapted for use in an internal combustion engine, generally indicated at 12. In this case, the assembly 10 of the present invention is illustrated in connection with a single cylinder 14 of an internal combustion engine 12 having a dual-overhead cam arrangement. Those having ordinary skill in the art will appreciate that the engine 12 is but one of the many internal combustion engines within which the present invention may be employed. By way of example, the present invention may be employed within a two-stroke or four-stroke engine. The cylinders may be arranged in an in-line, v-shaped, or flat manner or in any other manner commonly known in the art. The present invention may also be employed with a carbureted or fuel injected internal combustion engine having single or dual overhead or undermount cam(s).

With continuing reference to Figure 1, the internal combustion engine 12 includes an engine block 16 having one or more cylinders 14, and a cylinder head generally indicated at 18 associated with the engine block 16. Rocker panels 20 are associated with the cylinder head 18 in a manner commonly known in the art. A piston, generally indicated at 22, is supported for reciprocal movement in a cylinder 14. A connecting rod, generally indicated at 24, is secured to the piston 22 through a piston pin 26 as will be explained in greater detail below. A crankshaft 28 is associated with the connecting rod 24 and an oil pan 30 is associated with the engine block 16. An intake valve 32 and an exhaust valve 33, each having valve stems 34 and valve springs 36 are supported in the cylinder head 18 and are opened and closed via cams 38 to provide fluid communication between the cylinder 14 and the intake valve 32 and the exhaust valves 33. The internal combustion engine 12 also includes a spark plug 40 for igniting the fuel within the combustion chamber 42 defined by the cylinder walls 44 and above the piston 22. Alternatively, or in addition, the engine 12 may include a fuel injector as a means of introducing atomized fuel into the combustion chamber. Thus, the present invention may be employed in connection with both a spark ignition or compression ignition (diesel) engine. Those having ordinary skill in the art will appreciate that the engine 12 also includes a number of other conventional components that are commonly known in the art and will not be described in detail here.

Generally, fuel is combusted within the combustion chamber 42 of a cylinder 14 to reciprocate the piston 22. The piston 22 drives the connecting rod 24, which drives the crankshaft 28, causing it to rotate within the engine block 16. Specifically, the combustion pressure within the cylinder 14 drives the piston 22 downward in a substantially linear, but slightly rotational motion. On the other hand, movement of the crankshaft 28 drives the connecting rod 24 in a substantially rotational motion.

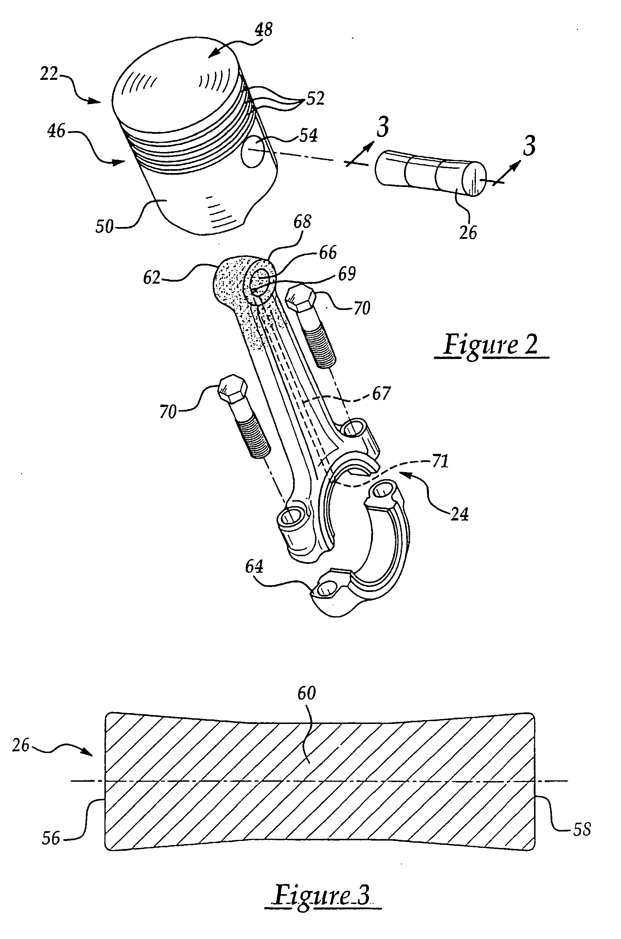

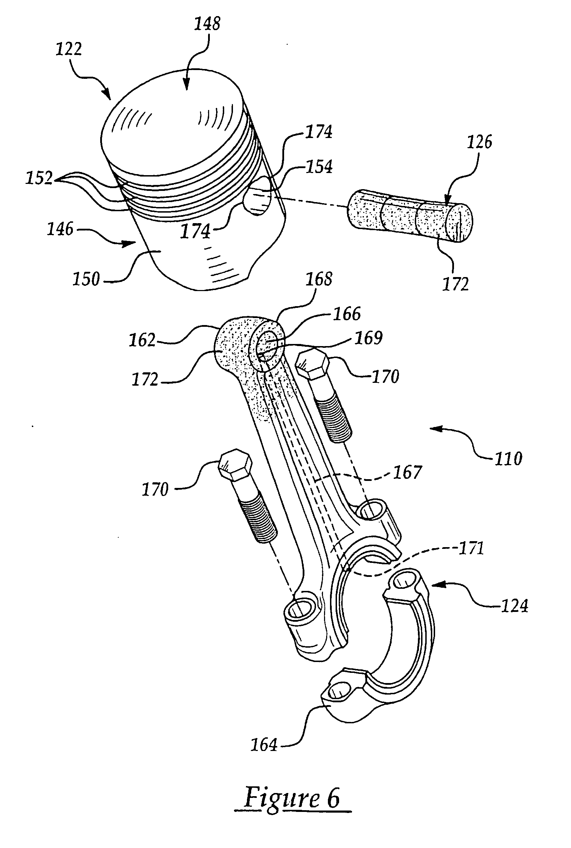

As shown in Figure 2, the piston 22 includes a body 46 having a crown 48 formed at the uppermost margins of the body 46 and a skirt 50 depending from the crown 48. Ring lands 52 extend about the outer circumference of the body 46 between the crown 48 and the skirt 50. The ring lands 52 are adapted to retain piston rings (not shown, but generally known in the art). The body 46 further includes a pin bore 54 formed therein. As shown in the Figures, the pin bore 54 includes a substantially circular circumference. However, those having ordinary skill in the art will appreciate that the pin bore 54 may include a variety of shapes. By way of example the pin bore 54 may include a substantially oval circumference. The pin bore 54 is adapted to receive the piston pin 26 as will be explained in greater detail below. Those having ordinary skill in the art will appreciate that within the scope of the present invention, pistons can have many different shapes, sizes, and other structural features. By way of example, the pistons may include any number of ring lands 52, or protrusions and/or recesses on the crown 48 for facilitating the combustion process and enhancing the power or efficiency derived therefrom. Furthermore, the pistons 22 may include recesses or grooves formed on the piston skirt 50 or a coating applied to the piston skirt 50. Still further, pistons 22 may include a burnished or chamfered pin bore 54. The pin bore 54 may also include side reliefs (see Figure 6) for receiving lubrication between the pin bore 54 and piston pin 26.

Referring to Figures 1-3, the piston pin 26 includes a pair of distal end faces 56 and 58, and a center portion 60 formed therebetween. While a tubular piston pin has been adopted as the standard for most applications, reducing the diameter in the center area of the piston pin 26 provides a relief of the pressure on the connecting rod 24 and leads to an increase in pin bore 54 strength. Accordingly, as shown in Figure 3, the preferred embodiment of the piston pin 26 of the present invention includes a profiled outer circumference that is substantially circular in cross-section with a larger diameter at the distal end faces 56, 58 than at the center portion 60. Accordingly, those having ordinary skill in the art will appreciate that a piston pin 26 may be operatively assembled relative to the pin bore 54 and connecting rod 24 through any number of manufacturing processes.

As mentioned above, the connecting rod 24 is adapted to interconnect the piston 22 and the crankshaft 28 so as to translate the reciprocal movement of the piston 22 into rotational movement of the crankshaft 28. To this end, the connecting rod 24 includes a first end 62 and a second end 64 with at least one of the ends having a bore 66 extending therethrough. The bore 66 defines an inner circumference. As shown in the Figures, the inner circumference of the bore 66 is substantially circular. However, those having ordinary skill in the art will appreciate that the inner circumference of the bore 66 may also define a plurality of other shapes. By way of example the inner circumference of the bore 66 may be substantially oval or include a tapered profile. The bore 66 is adapted to be aligned with the piston pin bore 54. The end 62 including the bore 66 further includes a bore housing 68 depending therefrom. The opposing end 64 of the connecting rod 24 is operatively secured to the crankshaft 28 through bolts 70. While the standard shape of the end 62 of the connecting rod 24 is best shown in Figure 2, those having ordinary skill in the art will appreciate that reduced weight and improved lubrication to the bore 66 may be achieved through employing a connecting rod 24 having a modified bore housing 68.

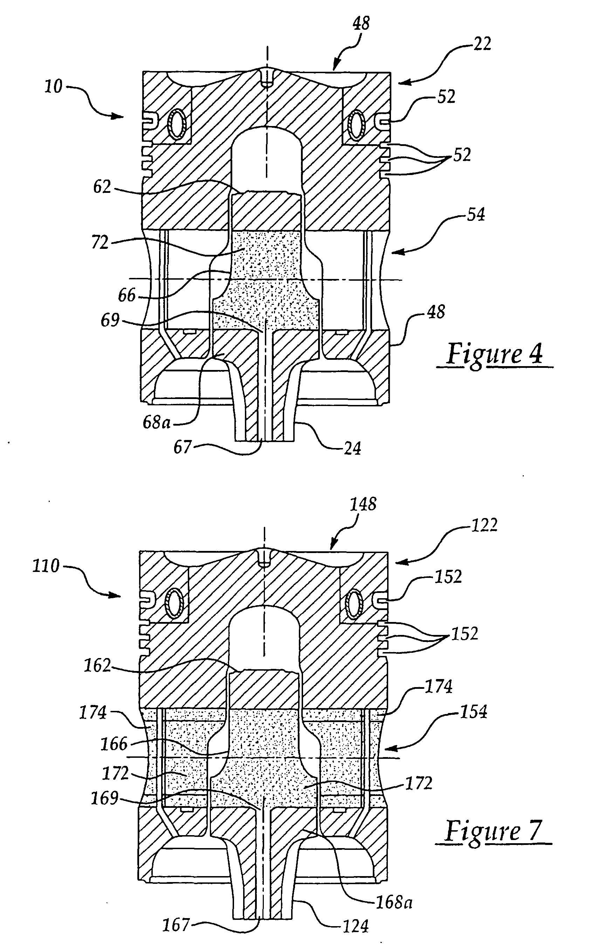

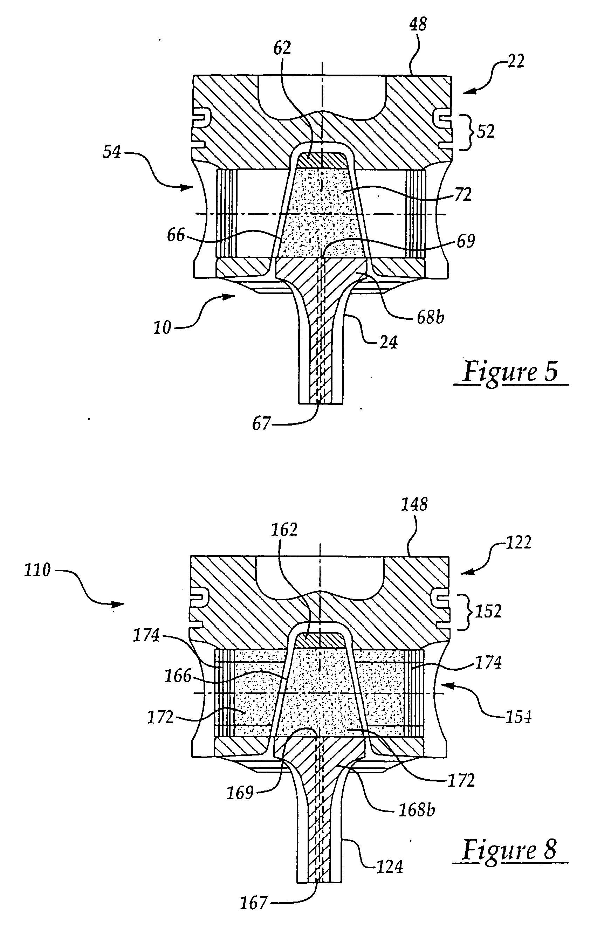

For example, as shown in Figures 4-5 where like numerals, increased in alphanumeric sequence, are used to designate like structure, the bore housing 68a and 68b may taper inwardly toward the end 62 of the connecting rod 24. As shown in Figure 4, the bore housing 68a tapers in a substantially stepped manner, while the bore housing 68b shown in Figure 5 tapers in a substantially trapezoidal manner. However, those having ordinary skill in the art will appreciate that the alternative shapes of the bore housings 68a and 68b shown in Figures 4 and 5 are intended to be illustrative and not exhaustive. Accordingly, connecting rods 24 having bore housings of all shapes are intended to be within the scope of the present invention.

The combined linear and rotational movement of the connecting rod 24 imposes a high level of stress on the pivot point between the connecting rod 24, and the piston 22, through the piston pin 26. The combination of high loads, temperature, gas pressure and inertial forces localized at this pivot point mandates that the contact areas of the connecting rod 24, piston 22, and piston pin 26 retain heightened properties relating to strength, thermal stress and lubrication. In the absence of such heightened properties, the pivot point between the piston 22, connecting rod 24, and piston pin 26 may scuff and ultimately fail. Accordingly, it is important to ensure that the pivot point between the piston 22, connecting rod 24 and piston pin 26 remains resistant to thermal stress and load fatigue while maintaining good friction and wear resistant properties during operation of the engine 12.

To this end, as shown in Figures 1-5, the connecting rod 24 further includes an internal gallery 67 extending between the first end 62 and opposing end 64. The internal gallery 67 includes a first port 69 along the inner circumference of the bore 66 and a second port 71 along the opposing end 64. The internal gallery 67 is adapted to direct lubricant between the first end 62 and the opposing end 64. Specifically, the internal gallery 67 directs lubricant between the outer circumference of the bore 66 and the opposing end 64 of the connecting rod 24 during the linear and rotational movement of the connecting rod 24 within the internal combustion engine 12.

To further resist thermal stress and load fatigue while maintaining good friction and wear resistant properties during operation of the engine 12, the end 62 of the connecting rod 24 including the bore 66 is adapted to receive a phosphatized coating 72. In the preferred embodiment, the coating 72 is a manganese phosphate solution having a thickness between two and eight microns. Moreover, the phosphatized coating 72 is applied to the inner circumference of the bore 66 so as to be interposed between the inner circumference of the bore 66 and the piston pin 26. The phosphatized coating 72 may be bonded solely to the inner circumference of the bore 66 extending through the end 62 of the connecting rod 24. However, the phosphatized coating 72 of the present invention is preferably applied to the connecting rod 24 by dipping the connecting rod 24 in the manganese phosphate solution. Nevertheless, those having ordinary skill in the art will appreciate that the phosphatized coating 72 may be applied in any known manner. By way of example, the phosphatized coating 72 may be applied through a spraying or swabbing process. Furthermore, those having ordinary skill in the art will appreciate that components of the present invention other than the connecting rod 24 may also receive a phosphatized coating 72, as will be explained in greater detail below.

An alternative embodiment of the piston and connecting rod assembly of the present invention is generally indicated at 110 in Figures 6-8 where like numerals, increased by 100 with respect to the embodiment of the invention illustrated in Figures 1-5, are used to designate like structure. The assembly 110 of the present invention as shown in Figures 6-8 is substantially similar in structure to the assembly 10 shown in Figures 1-5 and so the description of the piston will not be repeated here except where expressly mentioned below. The assembly 110 shown in Figure 6 is adapted for use with a piston 122 having a body 144 including a pin bore 154 formed therein. The pin bore 154 of the piston 122 defines an inner circumference including a first port 169 and side relief channels 174 adapted to receive lubrication between the piston pin 126 and the inner circumference of the pin bore 154. As shown in Figures 7 and 8, the pin bore 154 of the piston 122 is adapted to receive a phosphatized coating 172. Accordingly, the phosphatized coating 172 is applied to the inner circumference of the pin bore 154 so as to be interposed between the inner circumference of the pin bore 154 and the piston pin 122.

With continuing reference to Figures 6-8, the assembly 110 of the present includes a connecting rod 124 having first and second ends, 162 and 164, respectively, with at least one of the ends 162 including a bore 166 extending therethrough. The connecting rod bore 166 is adapted to be aligned with the pin bore 154 of the piston 122 and to receive a phosphatized coating 172.

As alternatively shown in Figures 7 and 8 where like numerals, increased in alphanumeric sequence, are used to designate like structure, the bore housing 168a and 168b may taper inwardly toward the phosphatized coated terminal end 162 of the connecting rod 124. As shown in Figure 7, the bore housing 168a tapers in a substantially stepped manner, while the bore housing 168b shown in Figure 5 tapers in a substantially trapezoidal manner. However, those having ordinary skill in the art will appreciate that shapes of the bore housings 168a and 168b shown in Figures 7 and 8 are intended to be illustrative and not exhaustive. Accordingly, connecting rods 124 having bore housings of all shapes are intended to be within the scope of the present invention inwardly.

As best shown in Figure 6, the assembly 110 further includes a piston pin 126 adapted to be operatively received through the aligned pin bore 154 in the piston 122 and the bore 166 extending through the end 162 of the connecting rod 124. The piston pin 126 shown in Figure 6 is substantially similar to the piston pin 26 shown in Figures 1-3, and has a profiled outer circumference. However, the piston pin 126 illustrated in Figure 6 includes a phosphatized coating 172. As in the case of the other embodiments discussed herein, the phosphatized coating 172 is preferably made from a manganese phosphate solution. Accordingly, the piston pin 126 of Figures 6-8 incorporates the alternative embodiments and/or methods of attachment to the piston 122 and connecting rod 124 disclosed with respect to the piston pin 26 illustrated in Figures 1-5 as though fully set forth with respect to the embodiment illustrated in Figure 6. In order to preserve the tolerance between the small end 162 of the connecting rod 124 and the piston pin 126, either the bores 154, 166 or the piston pin 126 may receive the phosphatized coating having a thickness of two to eight microns. Additionally, those having ordinary skill in the art will appreciate that both the bores 154, 166 and the piston pin 126 may receive a phosphatized coating where the sum thickness of the phosphatized coatings has a thickness between two and eight microns. Thus, unlike coatings taught in the prior art, a phosphatized coating having a thickness between two and eight microns preserves the engineered tolerances between the piston pin and the pin bores associated in both the small end of the connecting rod as well as the piston.

Accordingly, the present invention overcomes the disadvantages of the related art and improves scuff resistance of a connecting rod 24, 124 and a piston pin 26, 126 during operation of an internal combustion engine 12 thereby prolonging the life of the relative components of an internal combustion engine 12 without undue wear resulting in "out of tolerance" conditions. Further, the piston and connecting rod assembly 10, 110 of the present invention eliminates the need for a bushing at the interface between the piston pin 26, 126 and the bore 66, 166 through the small end of the connecting rod. In this way, the present invention reduces weight within an internal combustion engine 12 and reduces the cost of manufacturing and assembling a piston pin and connecting rod assembly 10, 110.

The present invention has been described in an illustrative manner. It is to be understood that the terminology that has been used is intended to be in the nature of words of description rather than of limitation. Many modifications and variations of the present invention are possible in light of the above teachings. Therefore, within the scope of the appended claims, the present invention may be practiced other than as specifically described.

## Claims

1. A piston and connecting rod assembly (10, 110) for use with an internal combustion engine (12), said assembly (10, 110) comprising:
a piston (22, 122) adapted for reciprocal movement within a cylinder (14) of the internal combustion engine (12), said piston (22, 122) having a body (46, 146) including a pin bore (54, 154) formed therein;
a connecting rod (24, 124) adapted to interconnect said piston (22, 122) and a crankshaft (28) so as to translate the reciprocal movement of the piston (22, 122) into rotational movement of the crankshaft (28), said connecting rod (24, 124) having first and second ends (62, 64, 162, 164) with at least one of said ends (62, 162) including a bore (66, 166) extending therethrough and adapted to be aligned with said pin bore (54, 154) in said piston 22, 122);
a pin (26, 126) adapted to be operatively received through said aligned pin bore (54, 154) in said piston (22, 122) and said bore (66, 166) extending through said end (62.162) of said connecting rod (24, 124), said pin (26, 126) including a pair of distal end faces (56, 58), a center portion (60) formed therebetween and a profiled outer circumference that is substantially circular in cross-section with a larger diameter at said distal end faces (56, 58) than at said center portion (60), **characterized in that** said pin (26, 126) tapers continuously from said distal end faces (56, 58) to said center portion (60); and
said profiled outer circumference and/or said end of said connecting rod (24, 124) aligned with said piston pin bore (54, 154) include a phosphatized coating (72, 172) that is adapted to facilitate relative angular movement between said bore (66, 166) extending through said connecting rod (24, 124) and said outer circumference of said profiled piston pin (26, 126), thereby facilitating reciprocal motion of said piston (22, 122) relative to the cylinder (14) of an internal combustion engine (12), said phosphatized coating (72, 172) having a thickness between two and less than eight microns.

2. The assembly as set forth in claim 1 wherein said bore (66, 166) extending through said end (62, 162) of said connecting rod (24, 124) defines an inner circumference, said phosphatized coating (72, 172) is bonded to said inner circumference so as to be interposed between said inner circumference and said pin (26, 126).

3. The assembly as set forth in any of claims 1 or 2 wherein said connecting rod (24, 124) further includes an internal gallery (67, 167) juxtaposed between said first and second ends (62, 64, 162, 164) to direct lubricant between said first and second ends (62, 64, 162, 164).

4. The assembly as set forth in any of the preceding claims wherein said connecting rod (24, 124) includes a terminal end (162) and a bore housing (68, 168) depending therefrom wherein said bore housing (168a) tapers inwardly toward said terminal end (162).

5. The assembly as set forth in any of the preceding claims wherein said pin bore (54, 154) in said piston body (46, 146) defines an inner circumference including a phosphatized coating (72, 172) interposed between said inner circumference and said pin (26, 126).

## Patentansprüche

1. Kolben/Pleuel-Baugruppe (10, 110) zur Verwendung in einer Verbrennungskraftmaschine (12), die folgende Teile enthält:
einen Kolben (22, 122), bestimmt für die Hin- und Herbewegung im Zylinder (14) der Verbrennungskraftmaschine (12), wobei im Körper (46, 146) des Kolbens (22, 122) die Kolbenbolzen-Bohrung (54, 154) angebracht ist;
einen Pleuel (24, 124), bestimmt, um den Kolben (22, 122) mit der Kurbelwelle (28) so zu verbinden, dass die Hin- und Herbewegung des Kolbens (22, 122) in eine Drehbewegung der Kurbelwelle (28) umgesetzt wird, wobei der Pleuel (24, 124) erste und zweite Augen (62, 64, 162, 164) besitzt, wobei mindestens eines dieser Augen (62, 162) eine durch das Auge hindurchgehende Bohrung (66, 166) aufweist, die so angelegt ist, dass sie mit der Kolbenbolzen-Bohrung (54, 154) des Kolbens (22, 122) fluchtet;
einen Kolbenbolzen (26, 126), dazu bestimmt, um im Betrieb durch die Kolbenbolzen-Bohrung (54, 154) im besagten Kolben (22, 122) in die zu ihr fluchtende Bohrung (66, 166) im Auge (62, 162) des Pleuels (24, 124) aufgenommen zu werden, wobei dieser Kolbenbolzen (26, 126) die beiden entgegengesetzten Endflächen (56, 58), ein zwischen ihnen geformtes Mittelstück (60) und einen profilierten äußeren Umfang umfasst, der seinerseits im Wesentlichen einen kreisförmigen Querschnitt mit einem größeren Durchmesser an den Endflächen (56, 58) als am Mittelstück (60) aufweist,
**dadurch gekennzeichnet,**
**dass** der Kolbenbolzen (26, 126) sich stetig von den besagten Endflächen (56, 58) bis zum besagten Mittelstück (6) verjüngt, und
**dass** der profilierte äußere Umfang und/oder das mit der Kolbenbolzen-Bohrung (54, 154) fluchtende Auge des Pleuels (24, 124) eine phosphatierte Beschichtung (72, 172) enthält, welche dazu bestimmt ist, die relative Winkelbewegung zwischen der durch den Pleuel (24, 124) hindurchgehenden Bohrung (66, 166) und dem äußeren Umfang des profilierten Kolbenbolzens (26, 126) zu erleichtern, wodurch auch die Hin- und Herbewegung des Kolbens (22, 122) im Zylinder (14) einer Verbrennungskraftmaschine (12) erleichtert wird, und wobei diese phosphatierte Beschichtung (72, 172) eine Stärke zwischen zwei und weniger als acht Mikrometer aufweist.

2. Baugruppe gemäß Anspruch 1, bei der die durch das Auge (62, 162) des Pleuels (24, 124) hindurchgehende Bohrung (66, 166) einen inneren Umfang aufweist, auf dem die besagte phosphatierte Beschichtung (72, 172) so haftet, dass sie zwischen diesem inneren Umfang und dem Kolbenbolzen (26, 126) liegt.

3. Baugruppe gemäß einem beliebigen der Ansprüche 1 oder 2, bei der der Pleuel (24, 124) weiterhin einen inneren Kanal (67, 167) enthält, der sich zwischen dem ersten und zweiten Auge (62, 64, 162, 164) erstreckt, um Schmiermittel vom einen zum anderen Auge (62, 64, 162, 164) zu leiten.

4. Baugruppe gemäß einem beliebigen der vorstehenden Ansprüche, bei der der Pleuel (24, 124) ein Endstück (162) und ein davon ausgehendes Bohrungsgehäuse (68, 168) enthält, wobei sich besagtes Bohrungsgehäuse (168a) zum Endstück (162) hin verjüngt.

5. Baugruppe gemäß einem beliebigen der vorstehenden Ansprüche, bei der die Kolbenbolzen-Bohrung (54, 154) im Kolbenkörper (46, 146) einen inneren Umfang aufweist, welcher eine zwischen diesem inneren Umfang und dem Kolbenbolzen (26, 126) liegende phosphatierte Beschichtung (72, 172) enthält.

## Revendications

1. Ensemble de piston et de bielle (10, 110) à utiliser dans un moteur à combustion interne (12), ledit ensemble (10, 110) comprenant :
un piston (22, 122) adapté pour un mouvement de va-et-vient à l'intérieur d'un cylindre (14) du moteur à combustion interne (12), ledit piston (22, 122) ayant un corps (46, 146) comprenant un alésage d'axe (54, 154) formé dans celui-ci ;
une bielle (24, 124) adaptée pour interconnecter ledit piston (22, 122) et un vilebrequin (28) afin de transformer le mouvement de va-et-vient du piston (22, 122) en un mouvement de rotation du vilebrequin (28), ladite bielle (24, 124) ayant des première et seconde extrémités (62, 64, 162, 164), au moins une desdites extrémités (62, 162) comprenant un alésage (66, 166) s'étendant à travers celle-ci et adapté pour être aligné avec ledit alésage d'axe (54, 154) dans ledit piston (22, 122) ;
un axe (26, 126) adapté pour être fonctionnellement reçu à travers ledit alésage d'axe aligné (54, 154) dans ledit piston (22, 122) et ledit alésage (66, 166) s'étendant à travers ladite extrémité (62, 162) de ladite bielle (24, 124), ledit axe (26, 126) comprenant une paire de faces d'extrémité distales (56, 58), une partie centrale (60) formée entre celles-ci, et une circonférence externe profilée de section transversale sensiblement circulaire et dont le diamètre aux dites faces d'extrémité distales (56, 58) est supérieur à celui de ladite partie centrale (60), **caractérisé en ce que** ledit axe (26, 126) s'amincit de manière continue à partir desdites faces d'extrémité distales (56, 58) vers ladite partie centrale (60) ; et
ladite circonférence externe profilée et/ou ladite extrémité de ladite bielle (24, 124) alignée avec ledit alésage d'axe de piston (54, 154) comprennent un revêtement phosphaté (72, 172) qui est adapté pour faciliter le mouvement angulaire relatif entre ledit alésage (66, 166) s'étendant à travers ladite bielle (24, 124) et ladite circonférence externe dudit axe de piston profilé (26, 126), facilitant ainsi le mouvement de va-et-vient dudit piston (22, 122) par rapport au cylindre (14) d'un moteur à combustion interne (12), ledit revêtement phosphaté (72, 172) ayant une épaisseur entre deux microns et moins de huit microns.

2. Ensemble selon la revendication 1, dans lequel ledit alésage (66, 166) s'étendant à travers ladite extrémité (62, 162) de ladite bielle (24, 124) définit une circonférence interne, ledit revêtement phosphaté (72, 172) étant lié à ladite circonférence interne de manière à être interposé entre ladite circonférence interne et ledit axe (26, 126).

3. Ensemble selon l'une quelconque des revendications 1 et 2, dans lequel ladite bielle (24, 124) comprend en outre un passage interne (67, 167) juxtaposé entre lesdites première et seconde extrémités (62, 64, 162, 164) pour diriger du lubrifiant entre lesdites première et seconde extrémités (62, 64, 162, 164).

4. Ensemble selon l'une quelconque des revendications précédentes, dans lequel ladite bielle (24, 124) comprend une extrémité terminale (162) et un logement d'alésage (68, 168) dépendant de celle-ci, dans lequel ledit logement d'alésage (168a) s'amincit vers l'intérieur vers ladite extrémité terminale (162).

5. Ensemble selon l'une quelconque des revendications précédentes, dans lequel ledit alésage d'axe (54, 154) dans ledit corps de piston (46, 146) définit une circonférence interne comprenant un revêtement phosphaté (72, 172) interposé entre ladite circonférence interne et ledit axe (26, 126).
